(19) **Europäisches Patentamt**
**European Patent Office**
**Office européen des brevets**

(11) **EP 4 459 239 B1**

(12) **EUROPÄISCHE PATENTSCHRIFT**

(45) Veröffentlichungstag und Bekanntmachung des Hinweises auf die Patenterteilung:
**01.07.2026   Patentblatt 2026/27**

(21) Anmeldenummer: **24201074.2**

(22) Anmeldetag: **20.11.2020**

(51) Internationale Patentklassifikation (IPC):
**G01F 1/60** (2006.01)      **G01F 15/00** (2006.01)
**G01F 1/58** (2006.01)      G01F 25/10 (2022.01)

(52) Gemeinsame Patentklassifikation (CPC):
**G01F 1/58; G01F 1/60; G01F 15/007;** G01F 25/10

(54) **VERFAHREN ZUM BETREIBEN EINES MAGNETISCH-INDUKTIVEN DURCHFLUSSMESSGERÄTES UND MAGNETISCH-INDUKTIVES DURCHFLUSSMESSGERÄT**

METHOD FOR OPERATING A MAGNETIC-INDUCTIVE FLOW METER AND MAGNETIC-INDUCTIVE FLOW METER

PROCÉDÉ DE FONCTIONNEMENT D'UN DÉBITMÈTRE MAGNÉTO-INDUCTIF ET DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **06.12.2019   DE 102019133462**

(43) Veröffentlichungstag der Anmeldung:
**06.11.2024   Patentblatt 2024/45**

(62) Dokumentnummer(n) der früheren Anmeldung(en) nach Art. 76 EPÜ:
**20811304.3 / 4 070 043**

(73) Patentinhaber: **Endress+Hauser Flowtec AG**
**4153 Reinach (CH)**

(72) Erfinder:
• **Spahlinger, Andre**
  **79415 Bad Bellingen (DE)**
• **Schaubhut, André**
  **79650 Schopfheim (DE)**
• **Rufer, Heinz**
  **4143 Dornach (CH)**
• **Küng, Thomas**
  **4142 Münchenstein (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
**RU-C1- 2 631 012       US-A- 4 408 497**
**US-A1- 2017 097 251**

**Beschreibung**

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss $\dot{V}$ ermittelt werden.

Magnetisch-induktive Durchflussmessgeräte finden vielfach Anwendung in der Prozess- und Automatisierungstechnik für Fluide ab einer elektrischen Leitfähigkeit von etwa 5 μS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Herkömmliche magnetisch-induktive Durchflussmessgeräte weisen ein Gehäuse um das Messsystem auf, welches dazu eingerichtet ist, das Messsystem vor Beschädigungen und externen Einflüssen, wie Fremdfeldern zu schützen. Bei mangelnder Abschirmung beeinflussen externe Magnetfelder das im Inneren des Messrohres erzeugte Magnetfeld, was zu Messfehlern führt.

Die US 20170097251 A1 offenbart ein Verfahren zum Einstellen einer konstanten Magnetfeldstärke eines Magnetfelds bei einem magnetisch-induktiven Durchflussmessgerät mit einem Stromregler. Zum Verkürzen der Einschwingzeit wird ein erstes Intervall mit einem Anfangszeitpunkt und einem Endzeitpunkt und ein zweites Intervall mit einem Anfangszeitpunkt und einem Endzeitpunkt vorgesehen, wobei für das erste Intervall ein erster Sollstromverlauf bestimmt wird, wobei der erste Sollstromverlauf um einen Differenzstromverlauf vom konstanten Sollstrom derart abweicht, dass der Differenzstromverlauf gegenüber dem konstanten Sollstrom eine höhere Änderungsrate der Magnetfeldstärke hin zur konstanten Magnetfeldstärke bewirkt, wobei für das zweite Intervall ein zweiter Sollstromverlauf bestimmt wird, indem dem zweiten Sollstromverlauf der konstante Sollstrom zugewiesen wird. Dem Stromregler wird im ersten Intervall der erste Sollstromverlauf und im zweiten Intervall der zweite Sollstromverlauf vorgegeben. Die US 4408497 A1 offenbart einen elektromagnetischen Durchflussmesser zum Messen der Durchflussmenge eines ferromagnetischen Schlamms, der durch ein Durchflussrohr mit daran angebrachten Elektroden geleitet wird, wobei der Schlamm ein magnetisches Feld auffängt, um in den Elektroden ein Signal zu induzieren, das von der Durchflussmenge abhängt. Der magnetische Widerstand des Kreises ändert sich in Abhängigkeit von der ferromagnetischen Konzentration des Schlamms, und diese Änderung wirkt sich auf die Induktivität der Spule aus. Um ein Ausgangssignal zu erhalten, das die Durchflussrate unabhängig von der ferromagnetischen Konzentration genau wiedergibt, wird das Ausgangssignal entsprechend der sich ändernden Induktivität der Erregerspule korrigiert.

Die RU 2 631 012 C1 offenbart ein Verfahren zum Betreiben eines magnetisch-induktiven Durchflussmessgerätes bei dem zusätzlich zur Messung des Flüssigkeitsdurchflusses die Zeit des Einschwingens gemessen wird, wenn der Strom in der Spule ein- oder ausgeschaltet wird. Dies erhöht gemäß der RU 2 631 012 C1 die Zuverlässigkeit der Erkennung von Ausfällen von Bauteilen eines Durchflussmessers und des Einflusses äußerer Störungen auf die Messgenauigkeit und Erhöhung der Messgenauigkeit, Erweiterung des Messbereichs und des Anwendungsspektrums des Geräts.

Der Erfindung liegt die Aufgabe zugrunde ein Verfahren zum Betreiben eines magnetisch-induktiven Durchflussmessgerätes bereitzustellen, mit dem Einflüsse durch magnetische Fremdfelder möglichst genau detektiert werden können.

Des Weiteren liegt die Aufgabe zugrunde ein magnetisch-induktives Durchflussmessgerät bereitzustellen, dass dazu ausgebildet ist das Verfahren auszuführen.

Die Aufgabe wird gelöst durch das Verfahren zum Betreiben eines magnetisch-induktiven Durchflussmessgerätes nach Anspruch 1 und durch das magnetisch-induktive Durchflussmessgerät nach Anspruch 6.

Das erfindungsgemäße Verfahren zum Betreiben eines magnetisch-induktiven Durchflussmessgerätes,

weist ein Messrohr zum Führen eines fließfähigen Mediums, mindestens zwei Messelektroden zum Erfassen einer strömungsgeschwindigkeitsabhängigen, in dem Medium induzierten Messspannung und eine magnetfelderzeugende Vorrichtung zur Erzeugung eines das Messrohr durchsetzenden Magnetfeldes auf,
wobei die magnetfelderzeugende Vorrichtung eine Spule aufweist;

und umfasst die Verfahrensschritte:

- Anlegen einer Steuerspannung an die Spule zur Erzeugung einer zeitlichen Spulenstromänderung; und

- Bestimmen der zeitlichen Spulenstromänderung in einem Umschaltbereich,

  wobei im Umschaltbereich so lange eine Spulenstromänderung vorliegt, bis ein Soll-Spulenstrom $I_{Soll}$ erreicht ist,

  wobei die zeitliche Spulenstromänderung in einem $\varepsilon$-Zeitbereich ($\varepsilon$) ermittelt wird,

  wobei der Spulenstrom im $\varepsilon$-Zeitbereich ($\varepsilon$) einmal die Fließrichtung ändert,

  wobei ein Betrag des Spulenstromes bei dem $\varepsilon$-Zeitbereich-Anfang ($T_{\varepsilon\text{-}Anfang}$) kleiner 15%, insbesondere kleiner 10% und bevorzugt kleiner 5% des Betrages des Soll-Spulenstromes $I_{Soll}$ ist,

  wobei der $\varepsilon$-Zeitbereich ($\varepsilon$) ein $\varepsilon$-Zeitbereich-Ende ($T_{\varepsilon\text{-}Ende}$) aufweist,

  wobei ein Betrag des Spulenstromes bei dem $\varepsilon$-Zeitbereich-Ende ($T_{\varepsilon\text{-}Ende}$) kleiner 15%, insbesondere kleiner 10% und bevorzugt kleiner 5% des Betrages des Soll-Spulenstromes $I_{Soll}$ ist,

- Überwachen der zeitlichen Spulenstromänderung und Zurückschließen auf eine Präsenz von Störeinflüssen.

Es ist besonders vorteilhaft, wenn über die Überwachung der zeitlichen Spulenstromänderung auf die Präsenz von Störeinflüssen zurückgeschlossen werden kann. Somit sind keine zusätzlichen Sensoren im oder am Messrohr notwendig, wie Hall-Sensoren oder Förster-Sonden, welche das resultierende Magnetfeld im Messrohr überwachen.

Mögliche Störeinflüsse auf das im Messrohr resultierende Magnetfeld sind externe Magnetfelder von Permanentmagneten, Schwankungen der Umgebungstemperatur, ferromagnetische Bestandteile im geführten Medium, Beschädigungen der magnetfelderzeugenden Vorrichtung, Produktionsfehler und/oder externe Magnetfelder von beispielsweise Elektromotoren oder -generatoren.

Herkömmliche magnetisch-induktive Durchflussmessgerät weisen Spulen auf, die mit Gleichstrom mit alternierender Stromrichtung betrieben werden. Der Zeitraum, in dem der Spulenstrom seinen Sollwert erreicht hat und in dem der Spulenstrom im Wesentlichen konstant ist, nennt man Messbereich. Der Zeitraum zwischen zwei aufeinanderfolgenden Messbereiche wird im Folgenden als Umschaltbereich bezeichnet. Das Umschalten des Vorzeichens der angelegten Spulenspannung bewirkt, dass der Spulenstrom in diesem Zeitraum so lange variiert, bis er einen Soll-Spulenstrom $I_{Soll}$ erreicht hat.

Der Soll-Spulenstrom $I_{Soll}$ kann der Spulenstrom sein, auf dem geregelt wird und bei dessen Erreichen eine Messung der im fließenden Medium induzierten Spannung erfolgt. In dem Zusammenhang wird ein derartiger Soll-Spulenstrom als Mess-Spulenstrom bezeichnet. Es sind jedoch auch Verfahren zum Regeln des Spulenstroms bekannt, bei denen der Spulenstrom im Umschaltbereich auf einen weiteren Soll-Spulenstrom geregelt wird, nämlich einem Peak-Spulenstrom, welcher größer als der Mess-Spulenstrom ist und bewirkt, dass die Zeit reduziert wird, welche abgewartet werden muss, bis der Spulenstrom den Mess-Spulenstrom nach dem Umschalten erreicht hat.

Erfindungsgemäß ist vorgesehen, dass die Spulenstromänderung in einem $\varepsilon$-Zeitbereich ermittelt wird,
wobei der Spulenstrom im $\varepsilon$-Zeitbereich einmal die Fließrichtung ändert.

Zur Erzeugung des Magnetfeldes wird eine Steuerspannung an eine Spulenanordnung, umfassend mindestens eine Spule angelegt. Der sich daraus ergebende charakteristische Spulenspannungsverlauf weist mehrere Zeitbereiche auf. Der $\varepsilon$-Zeitbereich beschreibt den Zeitraum, in dem der Spulenstrom die Fließrichtung ändert. Er umfasst den Nulldurchgang des Spulenstroms, in dem kein Strom durch die Spule fließt und den unmittelbaren Zeitraum davor und danach.

Es ist besonders vorteilhaft, wenn die Spulenstromänderung im $\varepsilon$-Zeitbereich detektiert wird und somit der Zustand mit eingeht, in dem der Spulenstrom im Wesentlichen Null oder zumindest minimal ist. Somit kann der Widerstand und somit auch die temperaturabhängigen Einflüsse des Widerstandes der Spulenwicklung minimiert werden.

Erfindungsgemäß ist vorgesehen, dass der $\varepsilon$-Zeitbereich ($\varepsilon$) einen $\varepsilon$-Zeitbereich-Anfang ($T_{\varepsilon\text{-}Anfang}$) aufweist,
wobei ein Betrag des Spulenstromes bei dem $\varepsilon$-Zeitbereich-Anfang ($T_{\varepsilon\text{-}Anfang}$) kleiner 15%, insbesondere kleiner 10% und bevorzugt kleiner 5% des Betrages des Soll-Spulenstromes $I_{Soll}$ ist.

Erfindungsgemäß ist vorgesehen, dass der $\varepsilon$-Zeitbereich ($\varepsilon$) ein $\varepsilon$-Zeitbereich-Ende ($T_{\varepsilon\text{-}Ende}$) aufweist,
wobei ein Betrag des Spulenstromes bei dem $\varepsilon$-Zeitbereich-Ende ($T_{\varepsilon\text{-}Ende}$) kleiner 15%, insbesondere kleiner 10% und bevorzugt kleiner 5% des Betrages des Soll-Spulenstromes $I_{Soll}$ ist.

Vorteilhafte Ausgestaltungen der Erfindung sind Gegenstand der Unteransprüche.

Eine Ausgestaltung sieht zusätzlich folgende Verfahrensschritte vor:

- Messen einer an der Spule anliegenden Spulenspannung; und

- Ermitteln einer Selbstinduktivität der Spule mittels der zeitlichen Spulenstromänderung und der Spulenspannung.

Induktivität ist eine Eigenschaft elektrischer Stromkreise oder Bauelemente, insbesondere von Spulen. Es ist zu unterscheiden zwischen Selbstinduktivität (auch Eigeninduktivität oder Selbstinduktion genannt) und Gegeninduktivität. Die Selbstinduktivität $L$ eines Stromkreises setzt die zeitliche Änderungsrate des elektrischen Stroms $I$ mit der elektrischen Spannung U in Beziehung:

$$U = L \cdot dI/dt$$

Die Gegeninduktion (oder induktive Kopplung) ist die gegenseitige magnetische Beeinflussung zweier oder mehrerer räumlich benachbarter elektrischer Stromkreise durch die elektromagnetische Induktion infolge einer Änderung des magnetischen Flusses.

Störeinflüsse beeinflussen die Selbstinduktivität des Gesamtsystem des magnetisch-induktiven Durchflussmessgerätes. Durch die Überwachung der Selbstinduktivität lassen sich Störeinflüsse detektieren und kompensieren, ohne das zusätzliche Sensorik im oder am Messrohr angebracht werden muss. Daher ist die Auswerteschaltung dazu ausgebildet die Selbstinduktivität aus dem Spulenstrom bzw. aus der Spulenstromänderung und der Spulenspannung zu ermitteln.

Vorteilhafterweise ist eine Messchaltung dazu eingerichtet die Spulenspannung und den Spulenstrom bzw. die Spulenstromänderung zu bestimmen.

Eine Ausgestaltung sieht zusätzlich folgende Verfahrensschritte vor:

- Ausgeben der zeitlichen Spulenstromänderung oder einer von der Spulenstromänderung abhängigen Größe.

Vorteilhafterweise wird die Spulenstromänderung oder eine von der Spulenstromänderung abhängige und für das Gesamtsystem charakteristische Größe mittels einer Ausgabeeinheit an den Nutzer weitergegeben. Somit erhält der Nutzer einen weiteren Überwachungsparameter, der insbesondere bei den Anwendungen Vorteile bietet, in denen ferromagnetischen Bestandteilen im Medium geführt werden.

Eine Ausgestaltung sieht zusätzlich folgende Verfahrensschritte vor:

- Bestimmen eines einer ermittelten Abweichung der zeitlichen Spulenstromänderung von einem Referenzwert zugeordneten Korrekturterms; und

- Berechnen eines korrigierten Messspannungswertes $U_{korr}$ unter Berücksichtigung des Korrekturterms und eines gemessenen Messspannungwertes $U_{meas}$ und/oder einer korrigierten, vom gemessenen Messspannungswert abhängigen Größe.

Eine Ausgestaltung sieht vor, dass der Referenzwert mittels eines mathematischen Modells, Kalibrationsverfahrens und/oder Simulationsprogrammes ermittelt ist,
wobei der Abweichung der Spulenstromänderung vom Referenzwert jeweils ein Korrekturterm zugeordnet ist.
Für gewisse Anwendungen ist es nicht ausreichend, dass eine permanente Diagnose des Zustandes des Magnetfeldes erfolgt. Gerade im Trinkwasserbereich wird vorgeschrieben, dass die Durchflussmessgerät unempfindlich gegenüber externer Störeinflüsse, wie beispielsweise durch Permanentmagneten ist.
Es ist daher vorteilhaft, wenn die Auswerteschaltung dazu eingerichtet ist die detektierte Abweichung der Spulenstromänderung von einem Referenzwert und die somit Beeinflussung bzw. Verfälschung des ermittelten Durchflussmesswertes zu korrigieren. Der Referenzwert wird zuvor bei der Justierung des magnetisch-induktiven Durchflussmessgerätes ermittelt und in einer Speichereinheit der Auswerteschaltung abgelegt.
Das erfindungsgemäße magnetisch-induktive Durchflussmessgerät ist dadurch gekennzeichnet, dass das Durchflussmessgerät eine Betriebs-, Mess- und/oder Auswerteschaltung aufweist, die dazu eingerichtet ist, das Verfahren nach einem der vorherigen Ansprüche auszuführen.
Messschaltungen im Bereich der Durchflussmesstechnik sind hinlänglich bekannt. Die Aufgabe der Messschaltung ist es, sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben.
Zum einen kann die Messschaltung dazu eingerichtet sein, ein Potential an einer der Messelektrode in Bezug auf ein Referenzpotential abzugreifen. Somit kann selbst dann, wenn eine der zwei Messelektroden ausfällt, weiterhin die Durchflussgeschwindigkeit anhand eines ermittelten Potentials bestimmt werden. Als Referenzpotential eignet sich das Gehäusepotential oder ein Erdpotential.
Zum anderen kann die Messschaltung so ausgebildet sein, dass sie eine zwischen zwei Messelektroden oder zwei Messelektrodengruppen vorherrschende Potentialdifferenz detektiert und aufnimmt.
Zusätzlich kann die Messschaltung dazu eingerichtet sein die Spulenspannung und den Spulenstrom bzw. die Spulenstromänderung an den Spulen zu bestimmen.
Eine Messschaltung umfasst daher einen Analog/Digital-Wandler, der die eingehenden Signale, in dem Fall die aktuell an dem jeweiligen Messelektrodenpaar anliegende Potentialdifferenz, das an der jeweiligen Messelektrode vorherrschende elektrische Potential oder der durch die Spule fließende Strom, in digitale Daten umwandelt, die dann durch eine Auswerteschaltung weiterverarbeitet oder gespeichert werden. Es sind aber auch andere Messumsetzer oder Messumformer der digitalen Messtechnik bekannt und geeignet zum Detektieren einer Messspannung oder eines elektrischen Potentials.

Die Auswerteschaltung ist dazu eingerichtet, die durch die Messschaltung gemessenen Messwerte der jeweiligen Messgrößen zu verarbeiten und die gesuchte Messgröße zu ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse der Durchflussmesssonde angeordnet ist.

Eine spezielle Ausgestaltung sieht vor, dass ein an die Spulen angelegter zeitlicher Spulenspannungsverlauf Umschaltbereiche und Messbereiche aufweist,

wobei Umschaltbereiche und Messbereiche alternieren,

wobei die Steuerspannung einer Messbereiche und die Steuerspannung einer insbesondere unmittelbar auf die Messbereiche folgenden Umschaltbereich entgegengesetzte Vorzeichen aufweisen.

Es ist besonders vorteilhaft, wenn für die Bestimmung des Durchflussmesswertes die induzierte Messspannung der Umschaltbereich abgewartet und ausschließlich in dem Messbereich gemessen wird, da sich das Magnetsystem in dem Zeitraum eingeschwungen hat. Das Umpolen der Spannungsquelle führt zu einem stabilen Nullpunkt und macht die Messung unempfindlich gegenüber Einflüssen durch Mehrphasenstoffe, Inhomogenitäten in der Flüssigkeit oder geringer Leitfähigkeit.

Eine spezielle Ausgestaltung sieht vor, dass die Spulenstromänderung in dem Umschaltbereich bestimmt wird.

Vorzugsweise wird der Spulenstrom bzw. die Spulenstromänderung in dem Umschaltbereich bestimmt, da der Spulenstrom in dem Messbereich konstant bzw. die Spulenstromänderung minimal ist.

Eine spezielle Ausgestaltung sieht vor, dass die Steuerspannung in dem Umschaltbereich konstant ist,

wobei die Steuerspannung in dem Umschaltbereich einen ersten Spannungswert annimmt,

wobei die Steuerspannung in dem Messbereich einen zweiten Spannungswert annimmt,

wobei der erste Spannungswert größer ist als der zweite Spannungswert.

Dieser charakteristische Spulenspannungsverlauf minimiert die Zeit in welcher der Spulenstrom einschwingt. Dadurch beginnt der Messbereich früher und die Arbeitsfrequenz kann erhöht werden.

Die Erfindung wird anhand der nachfolgenden Figuren näher erläutert. Es zeigt:

Fig. 1: ein magnetisch-induktives Durchflussmessgerät; und
Fig. 2: ein Diagramm, welches den zeitlichen Verlauf des Spulenstroms und der Spulenspannung abbildet.

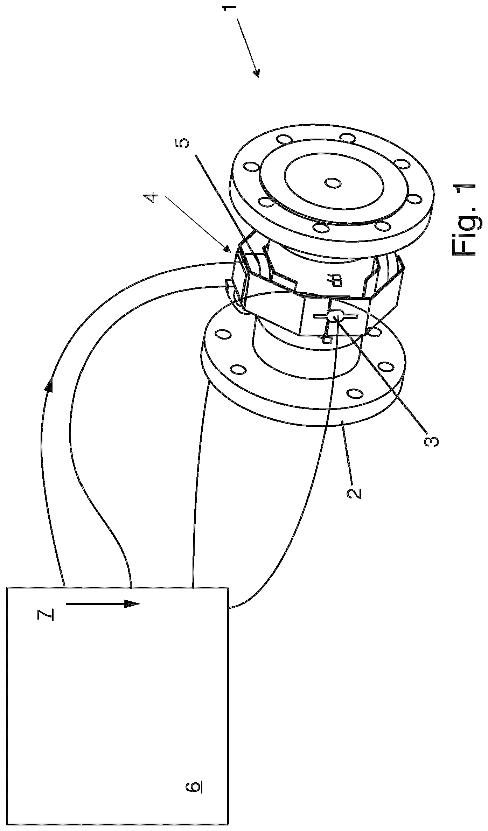

Der Aufbau und das Messprinzip des magnetisch-induktiven Durchflussmessgerätes 1 ist grundsätzlich bekannt (siehe Fig. 1). Durch ein Messrohr 2 wird ein Medium geleitet, das eine elektrische Leitfähigkeit aufweist. Das Messrohr 2 umfasst üblicherweise ein metallisches Rohr oder ein Kunststoffrohr. Eine magnetfelderzeugende Vorrichtung 4 ist so angebracht, dass sich die Magnetfeldlinien senkrecht zu einer durch die Messrohrachse definierten Längsrichtung orientieren. Als magnetfelderzeugende Vorrichtung 4 eignet sich vorzugsweise eine Sattelspule oder ein Polschuh mit aufgesetzter Spule 5. Bei angelegtem Magnetfeld entsteht im Messrohr 2 eine Potentialverteilung, die mit an der Innenwand des Messrohres 2 gegenüberliegend angebrachten Messelektroden 3 abgegriffen wird. In der Regel werden zwei Messelektroden 3 verwendet, welche diametral angeordnet sind und eine Elektrodenachse bilden, die senkrecht zu einer Symmetrieachse der Magnetfeldlinien und der Längsachse des Messrohres 2 verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Ist die Dichte des Mediums bekannt, so kann der Massedurchfluss bestimmt werden. Um das Ableiten der an den Messelektroden 3 anliegenden Messspannung über das Rohr zu verhindern, wird die Innenwand mit einem isolierenden Material bzw. einem Kunststoff-Liner ausgekleidet.

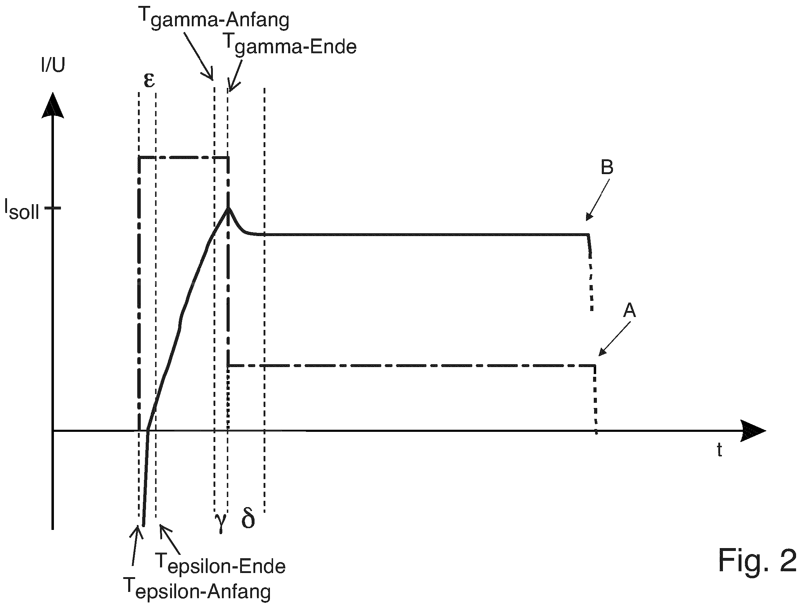

Das mittels der Spulen- und Polschuhanordnung aufgebaute Magnetfeld wird durch einen getakteten Gleichstrom wechselnder Strömungsrichtung erzeugt. Eine Betriebsschaltung 6 ist mit den beiden Spulen 5 verbunden und ist dazu eingerichtet eine Steuerspannung mit einem charakteristischen Verlauf an die Spulenanordnung anzulegen, mit welchem der Spulenstrom reguliert wird. Ein charakteristischer Verlauf der Steuerspannung ist in der Fig. 2 zu sehen. Das Umpolen der Steuerspannung gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Eine Mess- und/oder Auswerteschaltung 7 liest die an den Messelektroden 3 anliegende Spannung aus und gibt die Durchflussgeschwindigkeit und/oder den errechneten Volumendurchfluss und/oder den Massedurchfluss des Mediums aus. Bei dem in Fig. 1 dargestellten Querschnitt eines magnetisch-induktiven Durchflussmessgerät 1 befinden sich die Messelektroden 3 in direktem Kontakt mit dem Medium. Die Kopplung kann jedoch auch kapazitiv erfolgen. Erfindungsgemäß ist die Mess- und/oder Auswerteschaltung 7 zusätzlich dazu eingerichtet die an den Spulen tatsächlich anliegenden Spulenspannung und den Spulenstrom bzw. die zeitliche Spulenstromänderung zu messen. Eine nicht abgebildete Anzeigeeinheit gibt die ermittelte Spulenstromänderung oder eine von der Spulenstromänderung abhängigen Größe aus. Alternativ kann eine Meldung oder ein Warnhinweis ausgegeben werden, wenn diese vom hinterlegten Referenzwert abweichen. Der Referenzwert wird mittels eines mathematischen Modells, Kalibrationsverfahrens und/oder Simulationsprogrammes ermittelt. Dies ist jedoch insbesondere bei Anwendungen im Trinkwasserbereich nicht ausreichend. Daher ist die Mess- und/oder Auswerteschaltung 7 dazu eingerichtet die ermittelten Abweichung mittels eines hinterlegten Korrekturfaktors zu korrigieren.

Die Fig. 2 zeigt ein Diagramm, welches den zeitlichen Verlauf des Spulenstroms B und der Spulenspannung A abbildet.

Der abgebildete Verlauf der Spulenspannung A ist charakterisiert durch zwei konstante Spannungswerte, die jeweils für einen gewissen Zeitraum an die Spulen angelegt werden, wobei sich die beiden Spannungswerte und die jeweils zugeordneten Zeiträume unterscheiden. Es sind jedoch auch Betriebsverfahren für magnetisch-induktive Durchflussmessgeräte bekannt, in denen nur ein konstanter Spannungswert mit wechselnder Polarität oder ein Spannungsverlauf angelegt wird, bei dem der Spannungswert zeitlich nachgeregelt wird. Die vorteilhaften Zeitbereiche, in denen die Einflüsse auf die Selbstinduktivität der Spule minimal sind, gelten jedoch auch für andere Betriebsverfahren. Der dargestellte Verlauf A zeigt ein Zeitintervall, welches sich mit der Zeit wiederholt und dessen Vorzeichen alterniert. Im Stand der Technik sind Spannungsverläufe bekannt, die zwischen den Zeiträumen, in denen eine Spannung an den Spulen angelegt wird, eine Ruhephase aufweisen, in der keine Spannung angelegt, sondern ausschließlich das Ausschwingverhalten der Spannung bestimmt wird.

Der abgebildete Verlauf des Spulenstroms B weist zwei Bereiche auf. In einem ersten Bereich ändert sich der Spulenstrom aufgrund einer Änderung der angelegten Spulenspannung. Dieser Bereich wird auch als Umschaltbereich bezeichnet. Im zweiten Bereich sind Spulenstrom und Spulenspannung im Wesentlichen konstant. Daher wird üblicherweise abgewartet, bis der Spulenstrom eingeschwungen und konstant ist bzw. den Zielwert erreicht hat, bevor die Messspannung an den Messelektroden abgegriffen und der Durchflussmesswert bestimmt wird. Der zweite Bereich wird auch als Messbereich bezeichnet. Des Weiteren weist der Verlauf des Spulenstrom drei weitere charakteristische Zeiträume ($\varepsilon$, $\delta$ und $\gamma$) auf.

Der $\varepsilon$-Zeitbereich deckt den Zeitraum ab, in dem der Spulenstrom die Fließrichtung ändert. Man spricht auch vom Nulldurchgang. Gerade beim Nulldurchgang fließt kein Spulenstrom durch die Spule und der Einfluss des elektrischen Widerstands der Spule auf die Selbstinduktivität der Spule wird vernachlässigbar klein. Dies ist besonders vorteilhaft, da dadurch Einflüsse durch die temperaturabhängige Leitfähigkeit des Spulenwicklungsmaterials beseitigt werden. Der $\varepsilon$-Zeitbereich weist einen $\varepsilon$-Zeitbereich-Anfang ($T_{\varepsilon\text{-}Anfang}$) und ein $\varepsilon$-Zeitbereich-Ende ($T_{\varepsilon\text{-}Ende}$) auf. Der $\varepsilon$-Zeitbereich beginnt, wenn der Betrag des gemessenen Spulenstromes kleiner 15%, insbesondere kleiner 10% und bevorzugt kleiner 5% des Betrages des Soll-Spulenstromes $I_{Soll}$ ist. Der $\varepsilon$-Zeitbereich endet wenn der Betrag des gemessenen Spulenstromes größer 15%, insbesondere größer 10% und bevorzugt größer 5% des Betrages des Soll-Spulenstromes $I_{Soll}$ ist, wobei $I_{Soll}$ gemäß der abgebildeten Ausgestaltung der Peak-Spulenstrom ist.

Der $\gamma$- und $\delta$-Zeitbereich liegen zeitlich unmittelbar hintereinander und decken im Wesentlichen den Zeitraum ab, in dem der Spulenstrom über- bzw. einschwingt. Der $\delta$-Zeitbereich umfasst den Zeitraum, in dem das Vorzeichen der Spulenstromänderung ein entgegengesetztes Vorzeichen hat als im $\gamma$-Zeitbereich. Des Weiteren nimmt die Spulenstromänderung in dem $\delta$-Zeitbereich ab, bis der Spulenstrom den Zielwert erreicht hat und der zweite Bereich beginnt. Der $\gamma$-Zeitbereich umfasst den Zeitraum unmittelbar vor dem $\delta$-Zeitbereich, wobei jedoch im gesamten Zeitbereich ein Spulenstrom fließt. Das heißt, dass der Nulldurchgang des Spulenstroms nicht im $\gamma$-Zeitbereich liegt. Vorzugsweise zeichnen sich die Spulenstromwerte des $\gamma$-Zeitbereiches dadurch aus, dass sie größer sind als der Zielwert des Spulenstroms im zweiten Bereich bzw. in dem Messbereich. Weiterhin ist der $\gamma$-Zeitbereich so gewählt, dass die Spulenstromwerte auf einer Geraden liegen. Es hat sich herausgestellt, dass die Wirbelströme im $\gamma$-Zeitbereich einen stabilen Zustand einnehmen und sich nicht bzw. nur geringfügig ändern. Somit ist auch ihr Einfluss auf die Selbstinduktivität der Spule minimal. Dadurch lassen sich bereits geringste Abweichungen der Selbstinduktivität vom Referenzwert die aufgrund externer Einflüsse entstehen detektieren und kompensieren. Der $\gamma$-Zeitbereich-Anfang ($T_{\gamma\text{-}Anfang}$) beginnt, wenn der Betrag des gemessenen Spulenstromes mindestens 75%, insbesondere mindestens 85% und bevorzugt 95% eines Betrages des Soll-Spulenstromes $I_{Soll}$ beträgt, wobei gemäß der abgebildeten Ausgestaltung der Soll-Spulenstromes $I_{Soll}$ dem Peak-Spulenstrom entspricht. Das $\gamma$-Zeitbereich-Ende ($T_{\gamma\text{-}Ende}$) wird durch den Beginn des $\delta$-Zeitbereiches definiert, insbesondere durch den Zeitpunkt, in dem der Spulenstrom die Stromrichtung ändert. Die Messwerte zur Ermittlung der Selbstinduktion stammen vorzugsweise ausschließlich aus dem $\gamma$-Zeitbereich.

**Bezugszeichenliste**

1 magnetisch-induktives Durchflussmessgerät
2 Messrohr
3 Messelektrode
4 magnetfelderzeugende Vorrichtung
5 Spule
6 Betriebsschaltung
7 Mess- und/oder Auswerteschaltung

$\varepsilon$     $\varepsilon$-Zeitbereich
$\gamma$     $\gamma$-Zeitbereich
$\delta$     $\delta$-Zeitbereich

$I_{Soll}$     Soll-Spulenstrom
$T_{\gamma\text{-}Anfang}$     $\gamma$-Zeitbereich-Anfang
$T_{\gamma\text{-}Ende}$     $\gamma$-Zeitbereich-Ende
$T_{\varepsilon\text{-}Anfang}$     $\varepsilon$-Zeitbereich-Anfang
$T_{\varepsilon\text{-}Ende}$     $\varepsilon$-Zeitbereich-Ende

**Patentansprüche**

1. Verfahren zum Betreiben eines magnetisch-induktiven Durchflussmessgerätes (1),

   wobei das magnetisch-induktive Durchflussmessgerät (1) ein Messrohr (2) zum Führen eines fließfähigen Mediums, mindestens zwei Messelektroden (3) zum Erfassen einer strömungsgeschwindigkeitsabhängigen, in dem Medium induzierten Messspannung und eine magnetfelderzeugende Vorrichtung (4) zur Erzeugung eines das Messrohr (2) durchsetzenden Magnetfeldes aufweist,
   wobei die magnetfelderzeugende Vorrichtung (4) eine Spule (5) aufweist;

   umfassend die Verfahrensschritte:

   - Anlegen einer Steuerspannung an die Spule (5) zur Erzeugung einer zeitlichen Spulenstromänderung; und
   - Bestimmen der zeitlichen Spulenstromänderung in einem Umschaltbereich,

   wobei im Umschaltbereich so lange eine Spulenstromänderung vorliegt, bis ein Soll-Spulenstrom $I_{Soll}$ erreicht ist,
   wobei die zeitliche Spulenstromänderung in einem $\varepsilon$-Zeitbereich ($\varepsilon$) ermittelt wird,
   wobei der Spulenstrom im $\varepsilon$-Zeitbereich ($\varepsilon$) einmal die Fließrichtung ändert,
   wobei der $\varepsilon$-Zeitbereich ($\varepsilon$) einen $\varepsilon$-Zeitbe-reich-Anfang ($T_{\varepsilon\text{-}Anfang}$) aufweist,
   wobei ein Betrag des Spulenstromes bei dem $\varepsilon$-Zeitbereich-Anfang ($T_{\varepsilon\text{-}Anfang}$) kleiner 15%, insbesondere kleiner 10% und bevorzugt kleiner 5% des Betrages des Soll-Spulenstromes $I_{Soll}$ ist,
wobei der $\varepsilon$-Zeitbereich ($\varepsilon$) ein $\varepsilon$-Zeitbe-reich-Ende ($T_{\varepsilon\text{-}Ende}$) aufweist,
wobei ein Betrag des Spulenstromes bei dem $\varepsilon$-Zeitbereich-Ende ($T_{\varepsilon\text{-}Ende}$) kleiner 15%, insbesondere kleiner 10% und bevorzugt kleiner 5% des Betrages des Soll-Spulenstromes $I_{Soll}$ ist,

   - Überwachen der zeitlichen Spulenstromänderung und Zurückschließen auf eine Präsenz von Störeinflüssen.

2. Verfahren nach Anspruch 1, umfassend die Verfahrensschritte:

   - Messen einer an der Spule (5) anliegenden Spulenspannung; und
   - Ermitteln einer Selbstinduktivität der Spule (5) mittels der zeitlichen Spulenstromänderung und der Spulenspannung im $\varepsilon$-Zeitbereich ($\varepsilon$).

3. Verfahren nach Anspruch 1 oder 2, umfassend den Verfahrensschritt:

   - Ausgeben der zeitlichen Spulenstromänderung oder einer von der Spulenstromänderung abhängigen Größe.

4. Verfahren nach mindestens einem der vorherigen Ansprüche, umfassend die Verfahrensschritte:

   - Bestimmen eines einer ermittelten Abweichung der zeitlichen Spulenstromänderung von einem Referenzwert zugeordneten Korrekturterms; und
   - Berechnen eines korrigierten Messspan-nungswertes $U_{korr}$ unter Berücksichtigung des Korrekturterms und eines gemessenen Mess-spannungwertes $U_{meas}$ und/oder einer korri-gierten, vom gemessenen Messspannungswert abhängigen Größe.

5. Verfahren nach mindestens einem der vorhergehenden Ansprüche,

   wobei der Referenzwert mittels eines mathema-tischen Modells, Kalibrationsverfahrens und/o-der Simulationsprogrammes ermittelt ist,
   wobei der Abweichung der zeitlichen Spulenstromänderung vom Referenzwert jeweils ein Korrekturterm zugeordnet ist.

6. Magnetisch-induktives Durchflussmessgerät, **dadurch gekennzeichnet,**
   **dass** das Durchflussmessgerät eine Betriebs-, Mess- und/oder Auswerteschaltung (6, 7) aufweist, die dazu eingerichtet ist, das Verfahren nach einem der vorherigen Ansprüche auszuführen.

## Claims

1. A method for operating an electromagnetic flowmeter (1),

    wherein the electromagnetic flowmeter (1) comprises a measuring tube (2) for conveying a flowable medium, at least two measuring electrodes (3) for detecting a measuring voltage induced in the medium and dependent on the flow velocity, and a magnetic field generating device (4) for generating a magnetic field passing through the measuring tube (2),
    wherein the magnetic field generating device (4) comprises a coil (5);
    comprising the method steps of:

      • applying a control voltage to the coil (5) in order to generate a temporal change in the coil current; and
      • determining the temporal change in the coil current within a switching region,

    wherein, in the switching region, a coil current change is present until a target coil current $I_{target}$ is reached,
    wherein the temporal change in the coil current is determined in an $\varepsilon$ time range ($\varepsilon$),
    wherein the coil current reverses its flow direction once within the $\varepsilon$ time range ($\varepsilon$),
    wherein the $\varepsilon$ time range ($\varepsilon$) comprises an $\varepsilon$ time range start ($T_{\varepsilon\text{-}start}$),
    wherein a magnitude of the coil current at the $\varepsilon$ time range start ($T_{\varepsilon\text{-}start}$) is less than 15%, in particular less than 10%, and preferably less than 5% of the magnitude of the target coil current $I_{target}$,
    wherein the $\varepsilon$ time range ($\varepsilon$) comprises an $\varepsilon$ time range end ($T_{\varepsilon\text{-}end}$),
    wherein a magnitude of the coil current at the $\varepsilon$ time range end ($T_{\varepsilon\text{-}end}$) is less than 15%, in particular less than 10%, and preferably less than 5% of the magnitude of the target coil current $I_{target}$;

      • monitoring the temporal change in the coil current and inferring the presence of interference influences.

2. The method according to claim 1, comprising the method steps of:

      • measuring a coil voltage applied to the coil (5);

    and
      • determining a self-inductance of the coil (5) by means of the temporal change in the coil current and the coil voltage within the $\varepsilon$ time range ($\varepsilon$).

3. The method according to claim 1 or 2, comprising the method step of:

      • outputting the temporal change in the coil current or a variable dependent on the coil current change.

4. The method according to at least one of the preceding claims, comprising the method steps of:

      • determining a correction term assigned to a determined deviation of the temporal change in the coil current from a reference value; and
      • calculating a corrected measured voltage value $U_{corr}$ taking into account the correction term and a measured voltage value $U_{meas}$ and/or a corrected variable dependent on the measured voltage value.

5. The method according to at least one of the preceding claims,

    wherein the reference value is determined by means of a mathematical model, a calibration method and/or a simulation program,
    wherein each deviation of the temporal change in the coil current from the reference value is associated with a correction term.

6. An electromagnetic flowmeter, **characterized in that**
    the flowmeter comprises an operating, measuring and/or evaluation circuit (6, 7) which is configured to carry out the method according to one of the preceding claims.

## Revendications

1. Procédé de fonctionnement d'un débitmètre électromagnétique (1),

    dans lequel le débitmètre électromagnétique (1) comprend un tube de mesure (2) destiné au passage d'un fluide s'écoulant, au moins deux électrodes de mesure (3) destinées à la détection d'une tension de mesure induite dans le fluide et dépendant de la vitesse d'écoulement, ainsi qu'un dispositif générant un champ magnétique (4) destiné à produire un champ magnétique traversant le tube de mesure (2),
    le dispositif générant un champ magnétique (4) comprenant une bobine (5) ;

**caractérisé en ce que** le procédé comprend les étapes suivantes :

• application d'une tension de commande à la bobine (5) afin de produire une variation temporelle du courant de bobine ; et
• détermination de la variation temporelle du courant de bobine dans une zone de commutation,

dans laquelle, dans la zone de commutation, une variation du courant de bobine est présente jusqu'à ce qu'un courant de bobine cible $I_{cible}$ soit atteint,
la variation temporelle du courant de bobine étant déterminée dans une plage temporelle ε (ε), le courant de bobine changeant une fois de sens dans ladite plage temporelle ε (ε),
la plage temporelle ε (ε) comprenant un début de plage temporelle ε ($T_{ε\text{-}début}$),
la valeur du courant de bobine au début de la plage temporelle ε ($T_{ε\text{-}début}$) étant inférieure à 15 %, en particulier inférieure à 10 % et de préférence inférieure à 5 % de la valeur du courant de bobine cible $I_{cible}$,
la plage temporelle ε (ε) comprenant également une fin de plage temporelle ε ($T_{ε\text{-}fin}$),
la valeur du courant de bobine à la fin de la plage temporelle ε ($T_{ε\text{-}fin}$) étant inférieure à 15 %, en particulier inférieure à 10 % et de préférence inférieure à 5 % de la valeur du courant de bobine cible $I_{cible}$ ;

• surveillance de la variation temporelle du courant de bobine et déduction de la présence d'influences perturbatrices.

2. Procédé selon la revendication 1, comprenant les étapes suivantes :

• mesure d'une tension de bobine appliquée à la bobine (5) ; et
• détermination d'une auto-inductance de la bobine (5) au moyen de la variation temporelle du courant de bobine et de la tension de bobine dans la plage temporelle ε (ε).

3. Procédé selon la revendication 1 ou 2, comprenant l'étape suivante :

• émission de la variation temporelle du courant de bobine ou d'une grandeur dépendant de ladite variation.

4. Procédé selon au moins l'une des revendications précédentes, comprenant les étapes suivantes :

• détermination d'un terme de correction associé à un écart déterminé entre la variation temporelle du courant de bobine et une valeur de référence ; et
• calcul d'une valeur de tension de mesure corrigée $U_{corr}$ en tenant compte du terme de correction et d'une valeur de tension de mesure mesurée $U_{meas}$ et/ou d'une grandeur corrigée dépendant de la valeur de tension de mesure mesurée.

5. Procédé selon au moins l'une des revendications précédentes,

la valeur de référence étant déterminée au moyen d'un modèle mathématique, d'un procédé d'étalonnage et/ou d'un programme de simulation,
chaque écart de la variation temporelle du courant de bobine par rapport à la valeur de référence étant associé à un terme de correction.

6. Débitmètre électromagnétique, **caractérisé en ce que**
le débitmètre comprend un circuit de commande, de mesure et/ou d'évaluation (6, 7) configuré pour exécuter le procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170097251 A1
- US 4408497 A1

- RU 2631012 C1